**Europäisches Patentamt**

**European Patent Office**

**Office européen des brevets**

(19)

(11) Veröffentlichungsnummer: **0 324 732 B1**

(12) # EUROPÄISCHE PATENTSCHRIFT

(45) Veröffentlichungstag der Patentschrift:
29.05.91 Patentblatt 91/22

(51) Int. Cl.⁵: **B60R 22/46**

(21) Anmeldenummer: **86906791.8**

(22) Anmeldetag: **04.12.86**

(86) Internationale Anmeldenummer:
**PCT/DE86/00497**

(87) Internationale Veröffentlichungsnummer:
**WO 87/03849 02.07.87 Gazette 87/14**

(54) GURTSTRAFFER MIT GURTBANDKLEMMEINRICHTUNG.

(30) Priorität: **17.12.85 DE 3544546**

(43) Veröffentlichungstag der Anmeldung:
**26.07.89 Patentblatt 89/30**

(45) Bekanntmachung des Hinweises auf die
Patenterteilung:
**29.05.91 Patentblatt 91/22**

(84) Benannte Vertragsstaaten:
**DE FR GB IT SE**

(56) Entgegenhaltungen:
**EP-A- 0 173 903**
**DE-A- 3 343 325**
**GB-A- 2 085 709**
**GB-A- 2 113 978**
**GB-A- 2 157 152**
**See also references of WO8703849**

(73) Patentinhaber: **GENERAL ENGINEERING**
**(NETHERLANDS) B.V.**
**Maliebaan 74**
**NL-3581 CV Utrecht (NL)**

(72) Erfinder: **Ernst, Hans-Hellmut**
**Bismarckallee 50**
**W-2070 Ahrensburg (DE)**

(74) Vertreter: **Gossel, Hans K., Dipl.-Ing. et al**
**Rechtsanwälte E. Lorenz - B. Seidler Dipl.-Ing.**
**H. K. Gossel Dr. I. Philipps Dr. P.B. Schäuble**
**Dr. S. Jackermeier - Dipl.-Ing. A. Zinnecker**
**Widenmayerstrasse 23 D-8000 München 22**
**(DE)**

EP 0 324 732 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Gurbandklemmeinrichtung für einen Gurtstraffer, insbesondere für eine rotatorische Gurtstraffereinheit, die in Kombination mit einem Aufroller oder auch allein zwischen einem Aufroller und einem Umlenker arbeitet.

Gurtstraffer dieser Gattung sind in der EP-A-0 138 507 und in der DE-A-35 37 891 bekannt geworden.

Oberhalb eines Aufrollers in einem gemeinsamen Gehäuse ist ein rotatorisch arbeitender Gurtstraffermotor angeordnet. Wird dieser Gurtstraffer aktiviert – entweder pyrotechnisch mittels eines Gasgenerators oder mechanisch über eine gespannte Feder – so dreht sich das Motorgehäuse. Über eine Umlenkrolle wird eine Gurtschlaufe gebildet. Da der untere Aufroller sperrt, wird das Gurtband von oben, also vom Insassen her über den Umlenker eingezogen. Je nach Gurtlose und Widerstand dreht sich der Motor mehr oder weniger weit und strafft somit mehr oder weniger Gurtband, bis sich ca. 20-25 ms nach T$_0$ der Insasse nach vorne bewegt und die Belastung im Gurtband starkt ansteigt.

Die Lastaufnahme nach durchgeführter Gurtstraffung erfolgt über eine Rastverzahnung am Motorgehäuse und zwei seitlich an den Gehäuseschenkeln angeordnete federbelastete Zahnklinken.

Das Abstützmoment ist dabei enorm hoch, da aufgrund der Schlingenlast die Belastung auf die Umlenkrolle nahezu doppelt so hoch ist, wie die Unfallast, die auf das Gurtband einwirkt. Außerdem ist der Hebelarm vom Drehpunkt des Gurtstraffermotors bis zur Umlenkrolle sehr groß. Wenngleich diese sehr hohen Kräfte technisch beherrschbar sind, so ist dafür doch ein erheblicher Aufwand erforderlich.

Noch kritischer ist die Situation der Blockiersicherheit, da praktisch ein unsynchronisierter Eingriff der Zahnklinken vorliegt. Der Punkt der Bewegungsumkehr zwischen Straffungsende und Blockiereingriff ist dem Zufall überlassen. Dabei sind, zwar mit geringer Wahrscheinlichkeit, Zahnstellungen möglich, die nur einen halben Zahneingriff ergeben oder Zahnüberspringer oder gar aufgrund von Toleranzen Zahneingriffe rechts und links in nicht korrespondierende Zahnlücken.

Letzlich ist es auch von Nachteil, den Gurtstraffermotor so stark dimensionieren zu müssen, daß er die gesamte Unfallast mit der bereits geschilderten ungünstigen inneren Kraftentfaltung aufzunehmen hat.

Der Erfindung liegt die Aufgabe zugrunde, eine Lastaufnahme bei einem Rotations-Gurtstraffermotor der geschilderten Gattung zu schaffen, die ohne Beteiligung des Gurtstraffer selbst erfolgt und vorzugsweise in Form einer Gurtklemmung bewerkstelligt wird.

Diese Aufgabe wird erfindungsgemäß durch die im Anspruch 1 augegebenen Merkmale gelöst.

Wird im Falle eines Unfalls der Gurtstraffermotor aktiviert, so bricht bei Bewegungsbeginn die Sollbruchstelle und der Gurtklemmkeil bewegt sich durch die Federkraft auf das Gurtband zu. Aufgrund der Sägezahnform kann jedoch noch ohne nennenswerten Widerstand Gurtband für den Gurtstraffungsvorgang eingezogen werden. Kommt der Motor zum Stillstand, so erfolgt unverzüglich durch den Gurtauszug (der Last) eine Gurtklemmung mit einem Selbstverstärkungseffekt. Eine Deblockierung ist nicht erforderlich, da durch den aktivierten Gurtstraffermotor ohnehin ein Austausch des Gerätes erfolgen muß. Die Lastaufnahme durch die vorgeschaltete Gurtklemmereinheit bietet gegenüber dem Stand der Technik folgende Vorteile.

1. Die Dimensionierung des Gurtstraffermotors braucht nur auf die Belastungen ausgelegt zu werden, die sich durch die Gurtstraffung ergibt. Er wird leichter und billiger, auch etwas kleiner.

2. Es müssen keinelaußergewöhnlich großen Kräfte innerhalb des Gerätes beherrscht werden.

3. Es ergeben sich keine sicherheitsrelevanten Zahneingriffsprobleme (Synchronisation, Zahnüberdeckung usw.)

In den Zeichnungen ist ein Ausführungsbeispiel der Erfindung dargestellt.

Es zeigen :

Fig. 1 Gurtstraffermotor mit Gurtbandklemmeinrichtung

Fig. 2 Explosionsdarstellung der Gurtbandklemmeinrichtung

Fig. 3/4 Gurtstraffer komplett vor/nach Aktivierung

Fig. 5 Klemmgehäuse der Gurtbandklemmeinrichtung

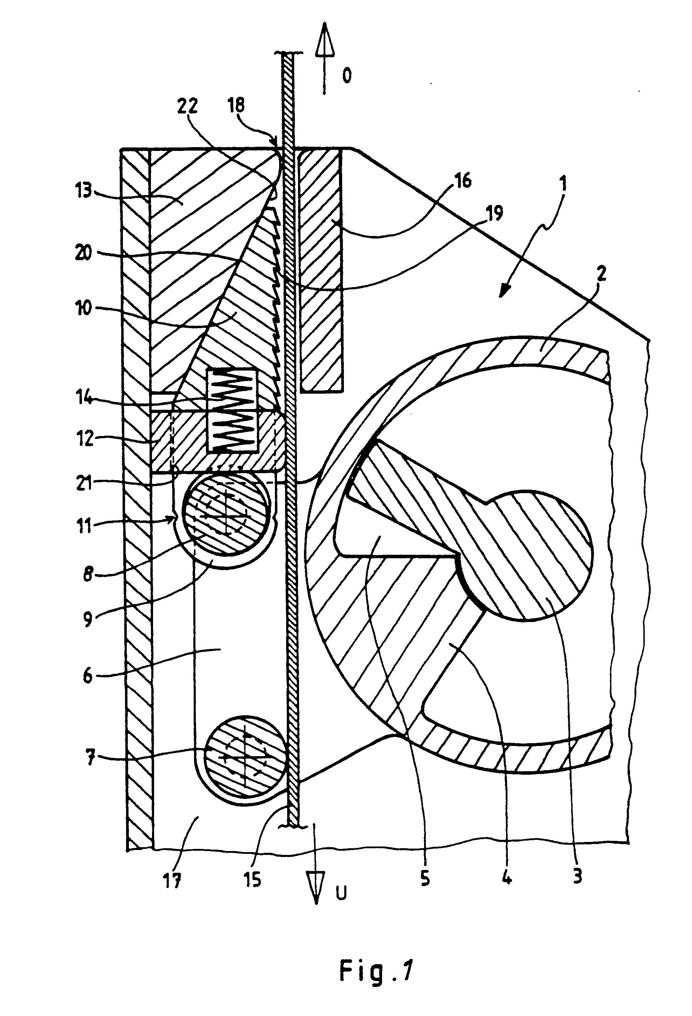

Die Fig. 1 zeigt in Schnittdarstellung den wesentlichen Teilbereich eines Gurtstraffers 1, der entweder für sich allein zwischen einem Aufroller und einem Umlenker angeordnet oder mit einem Aufroller kombiniert sein kann. Gemäß dem Pfeil U wird das Gurtband zum Aufroller geführt. Der Preil O in Gurtauszugsrichtung weist auf den oberhalb angeordneten Umlenker. Über den Stator 3 ist der rotatorische Gurtstraffer 1 mit seinem Motorgehäuse 2 im Gehäuse 17 gelagert. Die dargestellte Ruhestellung ist fixiert. Das Gurtband 15 läuft oben in einen Gurtschlitz 18, der von der Klemmrampe 13 und der Gegenwand 16 gebildet wird. Auch der Lagerbock 12 bildet mit seiner Vorderkante eine Gurtführung, so daß in Ruhestellung das Gurtband 15 nicht mit den Zähnen 19 des Gurtklemmkeiles 10 in Berührung kommt. Durch einen Schlitz 21 im Lagerbock 12 ist der Gurtklemmkeil 10 über eine Verbindung 9 mit der Führungsrolle 8 des Gurtstraffers 1 verbunden. Der Gurtklemmkeil 10 liegt voll auf dem Lagerbock 12 auf und mit seinem Rücken 20 voll gegen die Gleitfläche 22 der Klemmrampe 13 an. Zwei Federn 14 sind zwischen Lagerbock 12 und Gurtklemmkeil 10 vorgespannt.

Im Falle einer vorbestimmten Verzögerung, die einem Unfall einer bestimmten Schwere entspricht, wird der Gurtstraffer 1 aktiviert, der hier in pyrotechnischer Arbeitsweise dargestellt ist. In den Kompressionsraum 5 fließt ein expandierendes Druckgas, so daß sich das Motorgehäuse 2 mit dem Flügel 4 gegen den Uhrzeigersinn zu drehen beginnt. Somit verdrehen sich auch die beiden Motorflansche 6 mit der darin gelagerten Umlenkroffe 7 und der Führungsrolle 8. Während des Drehvorganges bildet die Umlenkroffe 7 mit dem Gurtband 15 eine Schlaufe. Da der unterhalb angeordnete Aufroller gesperrt ist, wird nur Gurtband von oben hereingezogen, wodurch die Gurtstraffung erzielt wird.

Beim Drehbeginn des Motorgehäuses 2 bersten die Sollbruchstellen 11 der Verbindung 9, so daß der Gurtklemmkeil 10 von den Federn 14 gegen das Gurtband 15 gedrückt wird.

Da die Zähne 19 mit einem Sägezahnprofil ausgebildet sind, verfügen sie über eine richtungsorientierte Abweisercharakteristik, so daß das Gurtband 15 zum Zwecke der Gurtstraffung noch weiter entgegen des Pfeiles O ohne nennenswerten Widerstand eingezogen werden kann.

Ist die im Gurtstraffer 1 enthaltene Energie verbraucht, bleibt das Motorgehäuse 2 stehen. Dieser Zustand stellt sich ungefähr 20 ms nach $T_o$ (Unfallbeginn) ein. Jetzt bewegt sich der Insasse von seinem Sitz und fällt in den Gurt. Der Gurt 15 wird in Richtung des Pfeiles O herausgezogen. Da aber der Gurtklemmkeil 10 durch die Federn 14 bereits am Gurtband 15 anliegt, ergibt sich aufgrund der geometrischen Verhältnisse zwischen Klemmrampe 13, Gurtklemmkeil 10 und Gegenwand 16 unmittelbar eine Gurtklemmung, die die Unfallast aufnimmt. Nach nur ca. 2 mm Gurtbandauszug liegt bereits eine vollständige Gurtarretierung vor, die einen Selbstverstärkungscharakter aufweist. Weder der Gurtstraffer 1 noch der darunter angeordnete Aufroller wird belastet.

Die Gurtarretierung erfolgt an jeder beliebigen Stelle, wenn eine Drehung des Gurtstraffers 1 stattgefunden hat. Es existieren keine Probleme mit Zahnverrastungen und deren Anforderungen an synchronisierten Eingriff, voller Zahnüberdeckung und dynamischer Belastungsfähigkeit. Es muß nur die Unfallast in tatsächlich anfallender Höhe aufgenommen werden. Es ergeben sich innerhalb des Gerätes also keine erhöhten Belastungen durch Schlingenlasten o. ä..

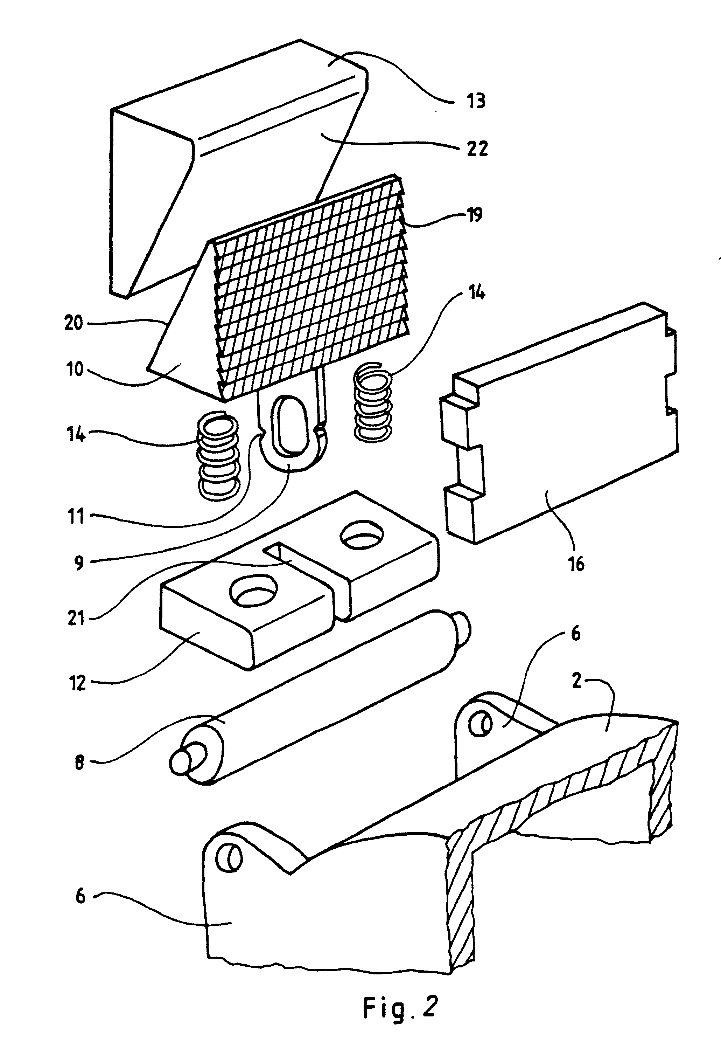

Die Fig. 2 zeigt die Teile aus Fig. 1 in einer perspektivischen Explosionsdarstellung, aus der die technischen Funktionszusammenhänge schnell und einfach zu ersehen sind.

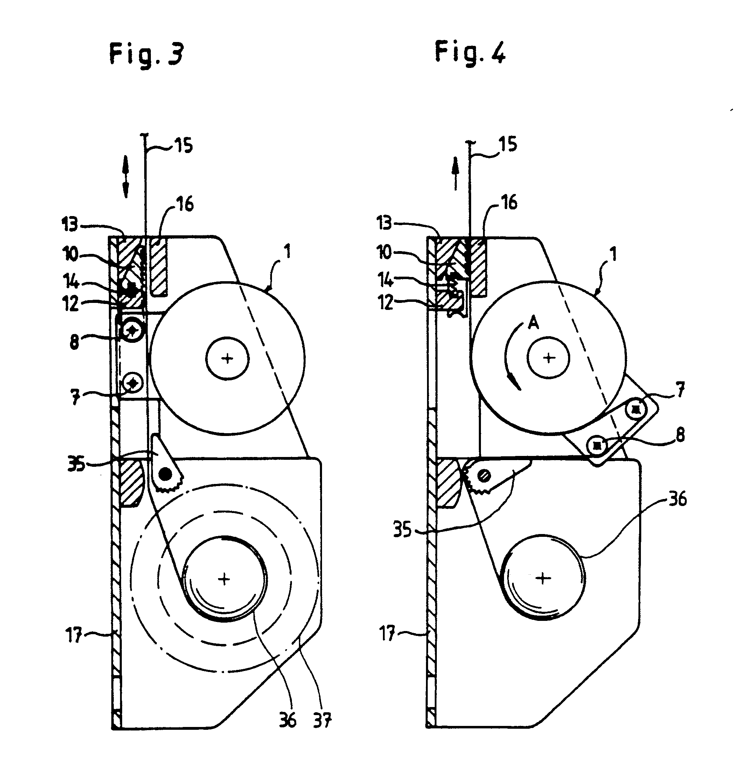

Die Figuren 3 und 4 zeigen das komplette Aggregat eines mit einem Aufroller kombinierten rotatorischen Gurtstraffers 1. Während die Fig. 3 die normale Gebrauchssituation mit den variablen Gurtwickeldurchmessern 36,37 darstellt, zeigt die Fig. 4 eine mögliche Endstellung nach einer Gurtstraffung im Unfall. Die Unfallast wird vom aktivierten Klemmkeil 10, sowie der Klemmrampe 13 und der Gegenwand 16 in das Gehäuse 17 geleitet.

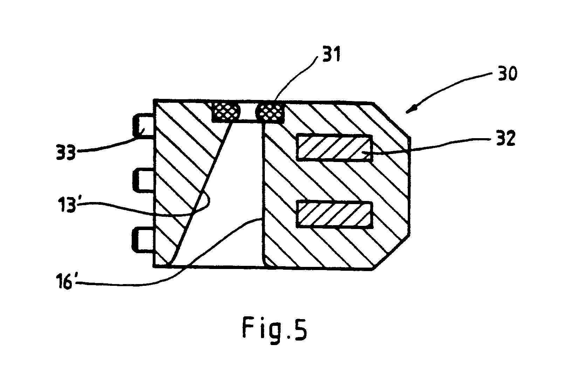

Die Fig. 5 zeigt die Mlöglichkeit, Klemmrampe 13' und Gegenwand 16' in einem Teil, dem Klemmgehäuse 30 zu vereinigen. Die Lastübertragung in das Gehäuse 17 erfolgt über Zapfen 33 und Querriegel 32.

Die erfindungsgemäße Gurtklemmeinrichtung kann als lasttragende Komponente für alle Arten von Gurtstraffern eingesetzt werden.

## Ansprüche

1. Gurtstraffer für Sicherheitsgurt mit einer mechanisch oder pyrotechnisch arbeitenden Antriebseinheit zum schlagartigen Einziehen des Gurtbandes im Gefahrenfall ab einer vorgegebenen Verzögerung, **dadurch gekennzeichnet**, daß oberhalb des Gurtstraffers (1) im Bereich des Gurtaustritts aus dem gemeinsamen Gehäuse (17) eine Gurtklemmeinheit (10, 13, 16) zur Aufnahme der Unfallast angeordnet ist, dessen Klemmkeil (10) unmittelbar nach der Aktivierung des Gurtstraffers (1) durch den Sollbruch von Verbindungselementen (9) mittels Federn (14) in Anlage an das Gurtband (15) gebracht wird und bis zur lastaufnehmenden Klemmung bei Gurtzugrichtungsumkehr in Klemmbereitschaft gehalten wird.

2. Gurtstraffer nach Anspruch 1, **dadurch gekennzeichnet**, daß ein Gurtklemmkeil (10) über Verbindungselemente (9) mit dem Gurtstraffer (1) gekuppelt ist und von diesem in der Ruhelage gehalten wird.

3. Gurtstraffer nach Anspruch 1 und 2, **dadurch gekennzeichnet**, daß im Falle der Aktivierung des Gurtstraffers (1) die Verbindung (9) zum Motorgehäuse (2) über Sollbruchstellen (11) aufgehoben wird und dadurch der Gurtklemmkeil (10) über Federn (14) in Klemmbereitschaft gelangt.

4. Gurtstraffer nach den vorangegangenen Ansprüchen, **dadurch gekennzeichnet**, daß die lastaufnehmende Gurtklemmung über einen verzahnten Gurtklemmkeil (10) erfolgt, der mittels Federkraft (14) über eine Klemmrampe (13) gegen das Gurtband (15) geführt wird, so daß das Gurtband (15) zwischen Gurtklemmteil (10) und Gegenwand (16) festgeklemmt wird.

5. Gurtstraffer nach den vorangegangenen Ansprüchen, **dadurch gekennzeichnet**, daß die Klemmrampe (13') und die Gegenwand (16') Bereiche eines einstückigen Klemmgehäuses (30) sind, welches über Querriegel (32) und Zapfen (33) mit dem Gehäuse (17) in Verbindung steht und am oberen Gurtaustrittspunkt mit einer Gurtführungsblende (31) versehen ist.

**Claims**

1. A belt tightening device for a safety belt comprising a mechanically or pyrotechnically operative drive unit for suddenly retracting the belt strap in a danger situation as from a predetemined deceleration characterised in that arranged above the belt tightening device (1) in the region in which the belt issues from the common housing (17) is a belt clamping unit (10, 13, 16) for carrying the accident loading, the clamping wedge member (10) of which is moved into contact against the belt strap (15) immediately after activation of the belt tightening device (1) by the desired rupture of connecting elements (9) by means of springs (14) and is held in clamping readiness in the event of a reversal of the direction of pull of the belt until the load-carrying clamping effect occurs.

2. A belt tightening device according to claim 1 characterised in that a belt clamping wedge member (10) is coupled by way of connecting elements (9) to the belt tightening device (1) and is held in the rest position by the latter.

3. A belt tightening device according to claim 1 or claim 2 characterised in that in the event of activation of the belt tightening device (1) the connection (9) to the motor housing (2) is broken by way of desired rupture locations (11) and thereby the belt clamping wedge member (10) moves into a condition of clamping readiness by way of springs (14).

4. A belt tightening device according to the preceding claims characterised in that the load-carrying belt clamping effect occurs by way of a toothed belt clamping wedge member (10) which is guided towards the belt strap (15) by means of spring force (14) by way of a clamping ramp (13) so that the belt strap (15) is clamped fast between the belt clamping wedge member (10) and the co-operating wall (16).

5. A belt tightening device according to the preceding claims characterised in that the clamping ramp (13') and the co-operating wall (16') are regions of a one-piece clamping housing (30) wich is connected to the housing (17) by way of transverse bars (32) and pins (33) and which is provided at the upper belt exit point with a belt guide orifice membr (31).

**Revendications**

1. Tendeur de ceinture pour ceinture de sécurité avec une unité d'entraînement fonctionnant mécaniquement ou pyrotechniquement pour la rétraction brusque de la sangle en cas de danger à partir d'un retard donné à l'avance, caractérisé en ce qu'en haut du tendeur de ceinture (1) au voisinage de la sortie de ceinture d'un boîtier commun (17) est disposée une unité de serrage de ceinture (10, 13, 16) pour l'absorption de la charge d'accident, dont le coin de serrage (10) est amené au moyen de ressorts (14) en application contre la sangle (15) immédiatement après l'activation du tendeur de ceinture (1) par la rupture imposée d'éléments de liaison (9) et maintenu à l'état prêt au coincement jusqu'au coincement absorbeur de charge lors de l'inversion du sens de traction de la ceinture.

2. Tendeur de ceinture selon la revendication 1, caractérisé en ce qu'un coin de serrage de ceinture (10) est accouplé par l'intermédiaire d'éléments de liaison (9) au tendeur de ceinture (1) et maintenu par celui-ci dans la position de repos.

3. Tendeur de ceinture selon la revendication 1 et 2, caractérisé en ce que dans le cas de l'activation du tendeur de ceinture (1), la liaison (9) avec le boîtier de moteur (2) est supprimée par l'intermédiaire de points (11) destinés à la rupture et que le coin de serrage de ceinture (10) parvient ainsi, par l'intermédiaire de ressorts (14), à l'état prêt au coincement.

4. Tendeur de ceinture selon les revendications précédentes, caractérisé en ce que le coincement de ceinture absorbeur de charge s'effectue par l'intermédiaire d'un coin de serrage de ceinture denté (10) qui est amené au moyen d'une force de ressort (14) par l'intermédiaire d'une rampe de coincement (13) contre la sangle (15), de sorte que la sangle (15) est immobilisée par coincement entre l'élément de serrage de ceinture (10) et la contre-paroi (16).

5. Tendeur de ceinture selon les revendications précédentes, caractérisé en ce que la rampe de coincement (13') et la contre-paroi (16') sont des portions d'un boîtier de coincement en une seule pièce (30) qui est en liaison avec le boîtier (17) par l'intermédiaire de verrous transversaux (32) et de tétons (33) et est pourvu d'un passage de guidage de ceinture (31) au point de sortie supérieur de la ceinture.

**Fig.1**

Fig. 2

# Fig. 3

# Fig. 4

Fig.5